# EUROPEAN PATENT APPLICATION

(11) **EP 4 628 356 A1**
(43) Date of publication of application: **08.10.2025**
(21) Application number: 25156197.3
(22) Date of filing: 06.02.2025
(51) Int. Cl.: B60L 58/13, B60L 58/14, B60L 58/21, B60L 58/22, B60L 3/12, B60L 15/20, B60L 50/51, B60L 50/64, B60L 50/60, B60L 58/19

(54) **CONTROL APPARATUS FOR SECONDARY BATTERY**

(30) Priority: 26.03.2024 JP 2024050454
(71) Applicant: MAZDA MOTOR CORPORATION, Hiroshima 730-8670 (JP)
(72) Inventor: Yamamoto, Takashi, Aki-gun, Hiroshima, 730-8670 (JP); Yamada, Yuto, Aki-gun, Hiroshima, 730-8670 (JP)
(74) Representative: von Tietzen und Hennig, Nikolaus

(57) **Abstract**

[Problem] To restrain performance deterioration of a secondary battery caused by peeling-off of a negative electrode active material.

[Means for Solution] A control apparatus 1 for a secondary battery 9 includes an SOC sensor 121 and a controller 100. The controller 100 determines whether or not, for at least one of a plurality of battery modules 90, an SOC is not less than a predetermined first reference value, and when the SOC is not less than the first reference value, performs a first control of connecting the plurality of battery modules 90 one by one to a motor 31 and causing the plurality of battery modules 90 to discharge one by one until the SOC of each battery module decreases to the first reference value.

## Description

### [Technical Field]

The present invention relates to a control apparatus for a secondary battery.

### [Background Art]

For example, Patent Literature 1 discloses a negative electrode active material for lithium-ion batteries that contains Si. The negative electrode active material includes a Si-containing granulated material in which Si alloy or pure Si and a particulate carbon material are compounded. According to Patent Literature 1, using Si for the negative electrode can enhance the discharge capacity of a lithium-ion battery.

### [Citation List]

### [Patent Literature]

[Patent Literature 1] Japanese Patent Laid-Open No. 2023-134205

### [Summary of Invention]

### [Problem to be Solved by the Invention]

Nevertheless, there is a possibility that the negative electrode active material as disclosed in Patent Literature 1 above is peeled off from a current collector due to repetition of expansion and contraction with charge and discharge. This is disadvantageous since such peeling-off of the negative electrode active material causes the function of the negative electrode to be impaired.

The present invention has been devised in view of such circumstances, and an object thereof is to restrain performance deterioration of a secondary battery caused by peeling-off of a negative electrode active material.

### [Means for Solving the Problem]

A first aspect of the present invention relates to a control apparatus for a secondary battery, the secondary battery including one or more battery cells each having a negative electrode including a negative electrode active material and a plurality of battery modules each including the one or more battery cells and connected to a driving source of a vehicle, the control apparatus supplying electric power to the driving source from the plurality of battery modules.

According to the first aspect, the control apparatus includes: a state sensor that detects a parameter indicating an SOC of each of the plurality of battery modules; and a controller configured to switch electric connections between the plurality of battery modules and the driving source based on a detection signal of the state sensor, and the controller is further configured to, based on a detection signal of the state sensor, determine whether or not, for at least one of the plurality of battery modules, the detected SOC is not less than a predetermined first reference value, and when the SOC is not less than the first reference value, to perform a first control of connecting the plurality of battery modules, in particular the battery modules with a measured SOC not less than the first reference value, one by one to the driving source and causing the plurality of battery modules to discharge one by one until the SOC of each battery module decreases to the first reference value.

Herein, the term "parameter indicating the SOC" is used in the broad sense. This parameter may be the SOC itself or may be a parameter that is changing in response to increase and decrease of the SOC, such as a current charge amount of the secondary battery. Also as a parameter to be compared with the first reference value, another parameter such as the current charge amount may be used in place of the SOC. Namely, the "case where the SOC is not less than the first reference value" may be a case where the SOC and the first reference value are directly compared, or may be a case where the SOC and the first reference value are indirectly compared, such as a case where the parameter indicating the SOC and the first reference value are compared.

According to the first aspect, the controller performs the first control when the SOC is not less than the first reference value. Performing the first control can keep the number of the battery cells as targets of charge and discharge as few as possible, as compared with the case where the plurality of battery modules are connected in parallel. This can restrain a frequency of expansion and contraction occurring in the battery cells caused by the intercalation reaction and/or the like, and restrain performance deterioration of the secondary battery caused by peeling-off of the negative electrode active material.

Moreover, in the case where discharge depths of the battery cells are deep, such as the case where the SOC is less than the first reference value, there arises concern of performance deterioration from another viewpoint different from that of the peeling-off, caused by the C-rate taking a high rate. Therefore, under conditions where such concern is supposed, the controller does not perform the first control. This is significantly advantageous to restraining the performance deterioration of the secondary battery.

Moreover, according to a second aspect, the controller may be configured to, based on a detection signal of the state sensor, determine whether or not, for all of the plurality of battery modules, the SOC is less than the first reference value, and when the SOC is less than the first reference value, perform a second control of connecting the plurality of battery modules to the driving source in parallel and simultaneously causing the plurality of battery modules to discharge.

According to the second aspect, when the discharge depths of the battery cells become deep, the plurality of battery modules are connected to the driving source in parallel. This can restrain the C-rate per battery module, consequently, per battery cell, and is advantageous to restraining the performance deterioration of the secondary battery. By switching the electric connections in accordance with the SOCs, the performance deterioration of the secondary battery can be restrained as much as possible.

Moreover, according to a third aspect of the present invention, the controller may be configured to, based on a setting input by an occupant of the vehicle, select one discharge mode out of a plurality of discharge modes that are set to correspond to the electric connections, and select and perform one of the first control and the second control based on a detection signal of the state sensor so as to attain the selected one discharge mode, and the plurality of discharge modes may include a first mode of continuing the first control regardless of the detection signal of the state sensor by allowing discharge within an SOC range with the first reference value as a lower limit, and a second mode of properly using the first control and the second control in accordance with the detection signal of the SOC sensor by allowing discharge within an SOC range with a second reference value as a lower limit, the second reference value being set to be less than the first reference value.

According to the third aspect, since the first reference value is the lower limit, the first mode results in a shorter travelable distance than the second mode. Since the first reference value is the lower limit, the first mode is more excellent in restraining the performance deterioration of the secondary battery than the second mode. In each of the first mode and the second mode, the travelable distance and the elongation of the service life of the secondary battery are not compatible with each other, but there is employed a configuration that priority is given any of these. The occupant can drive the vehicle in the first mode or can also drive the vehicle in the second mode.

As above, by employing a configuration of causing the occupant to select one of the first mode and the second mode without fixation to one of these, flexible discharge control can be attained in accordance with a preference of the occupant, a situation where the occupant is placed, and the like. This can improve usability of the vehicle.

Moreover, according to a fourth aspect of the present invention, after the driving source is started, the controller may be configured to notify the occupant of first information configured to include a first distance indicating a travelable distance of the vehicle in the first mode, a second distance indicating a travelable distance of the vehicle in the second mode, a first deterioration index indicating a degree of deterioration of a maximum capacity of the secondary battery after traveling of the whole first distance, and a second deterioration index indicating the degree of deterioration after traveling of the whole second distance, and may accept selection of the first mode or the second mode based on the setting input of the occupant.

According to the fourth aspect, by notifying the occupant of the first information as mentioned above, an advantage of the first mode and an advantage of the second mode can be quantitatively grasped. Thereby, flexible discharge control can be attained in accordance with the preference of the occupant, the situation where the occupant is placed, and the like. This can improve usability of the vehicle.

Moreover, while when only the first distance and the second distance are displayed, the second mode which leads to a longer travelable distance tends to be selected, by simultaneously making notification of the first deterioration index and the second deterioration index along with those, the occupant can be caused to grasp the degree of deterioration of the secondary battery quantitatively. This can enhance the frequency of selection of the first mode, and is advantageous to restraining the performance deterioration of the secondary battery.

Moreover, according to a fifth aspect of the present invention, based on the first deterioration index and the second deterioration index, the controller may be configured to respectively estimate a first residual value index indicating an economic value of the secondary battery after traveling of the whole first distance and a second residual value index indicating the economic value after traveling of the whole second distance, and the first information may be configured to include both the first residual value index and the second residual value index.

According to the fifth aspect, by further making notification of the first residual value index and the second residual value index, the occupant can be caused to grasp the degree of deterioration of the secondary battery more appropriately. This can enhance the frequency of selection of the first mode, and is advantageous to restraining the performance deterioration of the secondary battery.

Moreover, according to a sixth aspect of the present invention, during the vehicle being traveling under selection of the first mode, the controller may be configured to notify the occupant of second information configured to include an elongated amount of the travelable distance in a case of switch from the first mode to the second mode and a third deterioration index indicating a degree of deterioration of a maximum capacity of the secondary battery after traveling of the whole elongated amount, and may accept change from the first mode to the second mode based on a setting input of the occupant.

According to the sixth aspect, the controller accepts change from the first mode to the second mode even during the vehicle being traveling. Thereby, flexible discharge control can be attained in real time in accordance with a situation where the occupant is placed, and the like. This can improve usability of the vehicle.

Moreover, while when the change to the second mode is simply accepted, the second mode which leads to a longer travelable distance tends to be selected, by notifying the occupant of the second information including the third deterioration index, the occupant can be caused to grasp the degree of deterioration of the secondary battery quantitatively. This can enhance the frequency of continuing the first mode, and is advantageous to restraining the performance deterioration of the secondary battery.

Moreover, according to a seventh aspect of the present invention, when a predetermined value that is set to be higher than the first reference value and lower than a fully charged state is set to an intermediate reference value, the controller may be configured to, based on the detection signal of the state sensor, determine whether or not the SOC of the entirety of the plurality of battery modules decreases to the intermediate reference value, and when the SOC decreases to the intermediate reference value, may perform notification of the second information.

According to the seventh aspect, the occupant can be notified of the second information in more appropriate timing. This can improve usability of the vehicle.

According to an eighth aspect of the invention, the controller may be configured to estimate the first distance based on a current SOC of the whole secondary battery, an electric power amount that can be used in the first mode, a torque load of the driving source being an electric motor, and a rotational speed of the driving source. In addition or as an alternative, the controller may also be configured to estimate the second distance based on a current SOC of the whole secondary battery, an electric power amount that can be used in the second mode, a torque load of the driving source (3), and a rotational speed of the driving source (3).

According to a ninth aspect, the controller may be configured to estimate the second deterioration index based on a current capacity of the secondary battery, a current SOC of the whole secondary battery, a temperature of the secondary battery and an electric power amount that can be used in the first mode. The controller may be configured to estimate the first deterioration index based on a current capacity of the secondary battery, a current SOC of the whole secondary battery, a temperature of the secondary battery and an electric power amount that can be used in the second mode. Said current capacity may be preferably a value that is recorded every time when the secondary battery 9 is charged.

Moreover, according to a tenth aspect of the present invention, the negative electrode active material includes Si.

It has been recently revealed that the problem of peeling-off as mentioned above is significant when a Si-based active material is used for the negative electrode active material. The configuration as in the first aspect above is particularly effective in the case of using such a Si-containing active material.

According to an eleventh aspect, the first reference value may be set to a value to be in a range between 10% to 30% relative to the fully charged state of a battery cell. Preferably the first reference value is set to a value in a range between 15% and 25%. More preferably, the first reference value is set to be 20%.

A further aspect of the invention is directed to a vehicle including a driving source for driving the vehicle and a secondary battery including a plurality of battery modules for providing electric power to the driving source. The vehicle further comprises a control apparatus according to anyone of the aspects as described before.

Another aspect of the invention is directed to a method for supplying electric power from a secondary battery to a driving source of a vehicle, the vehicle comprising a secondary battery consisting of one or more battery cells each having a negative electrode including a negative electrode active material and a plurality of battery modules each including the one or more battery cells and connected to a driving source of the vehicle. The vehicle further comprises a control apparatus supplying electric power to the driving source from the plurality of battery modules. The method includes the steps of detecting by a state sensor a parameter indicating an SOC of each of the plurality of battery modules; and switching electric connections between the plurality of battery modules and the driving source based on a detection signal of the state sensor, wherein, based on a detection signal of the state sensor, determine whether or not, for at least one of the plurality of battery modules, the detected SOC is not less than a predetermined first reference value, and when the SOC is not less than the first reference value, perform a first control of connecting the plurality of battery modules one by one to the driving source and causing the plurality of battery modules to discharge one by one until the SOC of each battery module decreases to the first reference value. According to a preferred aspect, the method is performed by a control apparatus as described before.

### [Advantageous Effects of Invention]

As described above, according to the present invention, gas can be discharged from the inside of the battery cell without causing precipitation of the electrode.

### [Brief Description of Drawings]

FIG. 1 is a schematic diagram exemplarily showing a vehicle.
FIG. 2 is an exploded view exemplarily showing a configuration of a secondary battery mounted on the vehicle.
FIG. 3A is a perspective view exemplarily showing a configuration of a battery cell.
FIG. 3B is a sectional view exemplarily showing a configuration of the battery cell.
FIG. 4 is a block diagram exemplarily showing a configuration of a control apparatus for a secondary battery.
FIG. 5 is a functional block diagram exemplarily showing a configuration of the control apparatus for a secondary battery.
FIG. 6A is a diagram for explaining a first control.
FIG. 6B is a diagram for explaining the first control.
FIG. 6C is a diagram for explaining the first control.
FIG. 6D is a diagram for explaining a second control.
FIG. 7 is a diagram for explaining the first mode and the second mode.
FIG. 8 is a diagram for explaining first information.
FIG. 9 is a diagram for explaining second information.
FIG. 10A is a flowchart exemplarily showing processing related to selection of the first mode and the second mode.
FIG. 10B is a flowchart exemplarily showing processing related to the second mode.
FIG. 10C is a flowchart exemplarily showing processing related to the first mode.
FIG. 11 is a diagram exemplarily showing a mode selection switch on a touch panel.

### [Mode for Carrying Out the Invention]

Hereafter, embodiments of the present invention will be described based on the drawings. Notably, the following description is exemplary illustrations.

### <1. Overall Configuration>

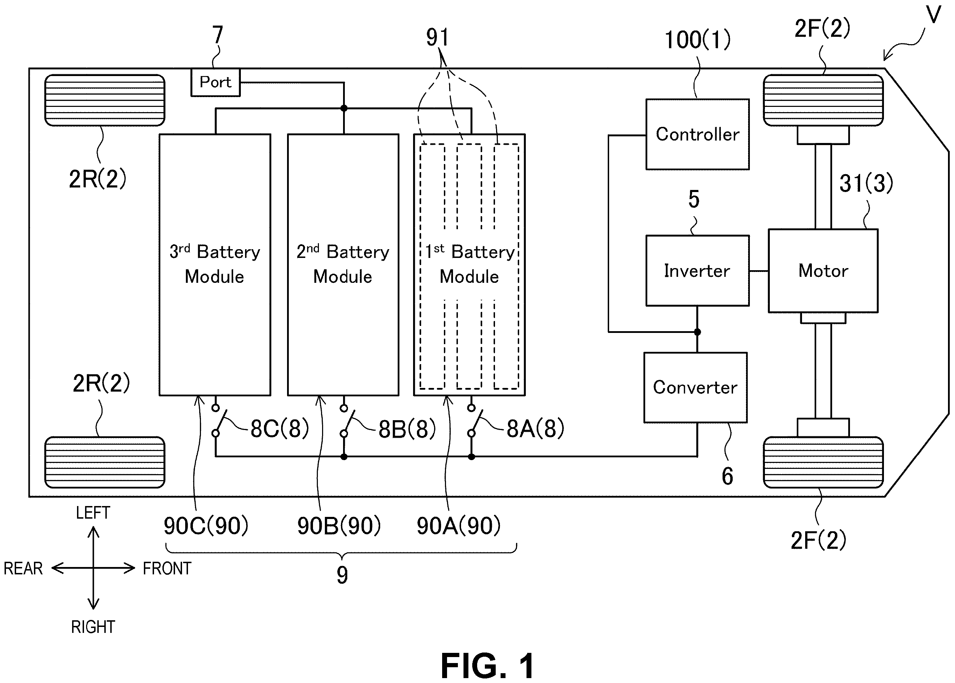

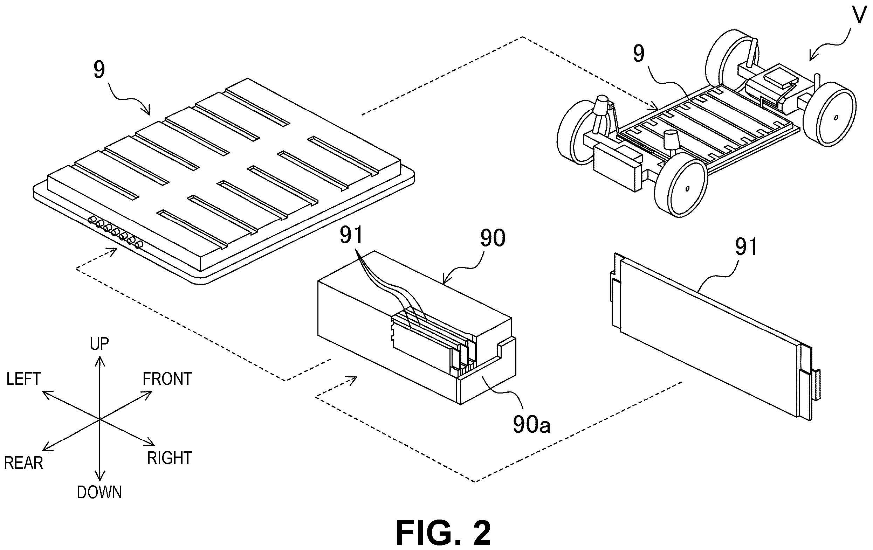

FIG. 1 is a schematic diagram exemplarily showing a vehicle V. FIG. 2 is an exploded view exemplarily showing a configuration of a secondary battery 9 mounted on the vehicle V. A control apparatus 1 for the secondary battery 9 according to the present embodiment is mounted on the vehicle V shown in the figures. The vehicle V is an automobile that can travels using electric power.

Specifically, the vehicle V according to the present embodiment is a so-called electric automobile (Electric Vehicle: EV). The vehicle V may be a hybrid car with electric power being as a primary energy source, such as a hybrid car in a plug-in scheme (Plugin Hybrid Electric Vehicle: PHEV).

Hereafter, a front-rear direction with a vehicle body of the vehicle V being as a reference is called "vehicle front-rear direction" or simply "front-rear direction". As exemplarily shown in FIG. 1 and FIG. 2, the "front" stated here means a direction where the vehicle V advances, and the "rear" means a direction where the vehicle V reverses (also refer to FIG. 2 mentioned later).

Likewise, a right-left direction with the vehicle body of the vehicle V being as the reference is called "vehicle width direction" or simply "right-left direction". As exemplarily shown in FIG. 1 and FIG. 2, the "right" stated here means a right side as viewed from an occupant on the vehicle V, and the "left" means a left side as viewed from the occupant.

Likewise, an up-down direction with the vehicle body of the vehicle V being as the reference is called "vehicle height direction" or simply "up-down direction". As exemplarily shown in FIG. 2, being on the "up" side stated here means being in a direction as viewed from the occupant of the vehicle V, being in a direction that is perpendicular to a road surface on the vehicle V and in which a thing is separating from the road surface. Meanwhile, being on the "down" side stated here means being in a direction as viewed from the occupant of the vehicle V, being in a direction that is perpendicular to the road surface on the vehicle V and in which a thing is coming close to the road surface.

The secondary battery 9 in the present embodiment is configured as a battery system including a plurality of battery modules 90 that is to be connected to a driving source 3 of the vehicle V. Herein, as shown in FIG. 1 and FIG. 2, each of the plurality of battery modules 90 includes one or more (in the present embodiment, a plurality of) battery cells 91. Furthermore, each of the one or more battery cells 91 has a negative electrode constituted of an active material (negative electrode active material) 92b.

Further, the control apparatus 1 for the secondary battery 9 in the present embodiment means an apparatus that supplies electric power from the plurality of battery modules 90 to the driving source 3 of the vehicle V. The control apparatus 1 can be rephrased as a control apparatus/control system that, by supplying electric power to the driving source 3 of the vehicle V, causes the driving source 3 to generate a traveling driving force of the vehicle V.

Specifically, the vehicle V according to the present embodiment includes a plurality of wheels 2, a motor 31 constituting the driving source 3, an inverter 5, a converter 6, a charging port 7, a switching circuit 8, the secondary battery 9, and a controller 100. Each of these elements is mounted or disposed on the vehicle V.

The plurality of wheels 2 include two front wheels 2F and two rear wheels 2R. Namely, the vehicle V according to the present embodiment is a four-wheeled automobile. The driving source 3 is coupled to all of or part of the plurality of wheels 2 via shaft(s) and the like.

The driving source 3 is constituted of the motor 31 that can perform a powering operation and a regenerative operation. For example, the motor 31 is a permanent magnet-type synchronous motor that is driven with three-phase alternating current.

In the powering operation, the motor 31 receives electric power supply from the secondary battery 9 to rotate. This rotation generates the traveling driving force of the vehicle V. When the motor 31 rotates in the powering operation, the rotation is transmitted via a not-shown shaft. The rotation transmitted via the shaft rotates at least part of the wheels 2, such as the two front wheels 2F. By the at least part of the wheels 2 rotating, the vehicle V travels.

Moreover, the motor 31 not only functions as a driving source in the powering operation but also can be caused to function as a generator in the regenerative operation. The motor 31 is electrically connected to the secondary battery 9 via the inverter 5 and the converter 6. This connection is used for both the powering operation and the regenerative operation as mentioned below in detail.

In the powering operation, the converter 6 steps down high voltage DC electric power supplied from the secondary battery 9 into DC electric power having a predetermined base voltage. The converter 6 inputs the DC electric power after the step-down into the inverter 5. The inverter 5 converts the DC electric power supplied from the secondary battery 9 via the converter 6 into three-phase alternating current having phases different from one another. The inverter 5 supplies the alternating current after the conversion to the motor 31. By supplying the alternating current to the motor 31, the motor 31 rotates as mentioned above.

In the regenerative operation, the inverter 5 converts AC electric power generated by rotation of the motor 31 into DC electric power. The inverter 5 inputs the DC electric power after the conversion into the converter 6. The converter 6 boosts the DC electric power input from the motor 31 via the inverter 5. The converter 6 charges the secondary battery 9 with the DC electric power after the boosting.

As mentioned above, the secondary battery 9 includes the plurality of battery modules 90. Also as mentioned above, each battery module 90 includes the one or more (in the present embodiment, the plurality of) battery cells 91.

For example, the secondary battery 9 according to the present embodiment includes a first module 90A, a second module 90B, and a third module 90C as battery modules 90 constituting the plurality of battery modules 90.

Herein, the plurality of battery modules 90 according to the present embodiment line up in the front-rear direction as shown in FIG. 1. Each of the battery modules 90 lining up in the front-rear direction is set to have, for example, three times or more the dimension in the vehicle width direction (longitudinal direction) as compared with the dimension in the vehicle height direction (transverse direction).

Moreover, for example, the plurality of battery modules 90 is connected to one motor 31 in parallel. The plurality of battery modules 90 may be individually connected to the motor 31 via respective converters 6.

Each battery module 90 is connected to the charging port 7 via an in-vehicle charger or the like. The charging port 7 can also be rephrased as a charging inlet. To the charging port 7, a connector of power supply equipment can be connected. This connection can supply electric power to the vehicle V from the power supply equipment via the charging port 7.

The switching circuit 8 is configured to switch, by receiving a control signal from the controller 100 to operate, electric connections between the plurality of battery modules 90 and the motor 31.

In detail, the switching circuit 8 is set to switch electric connections to the motor 31 individually for the respective battery modules 90. More in detail, the switching circuit 8 performs electrically connecting (relaying, supplying electricity) or disconnecting (separating) between the battery modules 90 and the motor 31 individually for the plurality of battery modules 90.

There is hereafter a case where a state where two elements are electrically connected is simply called a "connected state" and a state where they are electrically disconnected is called a "disconnected state".

For example, in the present embodiment, the switching circuit 8 includes a first circuit 8A that switches an electric connection between the first module 90A and the motor 31, a second circuit 8B that switches an electric connection between the second module 90B and the motor 31, and a third circuit 8C that switches an electric connection between the third module 90C and the motor 31.

Each of the first circuit 8A, the second circuit 8B, and the third circuit 8C may be constituted of a relay circuit that opens and closes a contact in accordance with a control signal received from the controller 100. Each of the circuits 8A to 8C constituting the switching circuit 8 switches between the "connected state" and the "disconnected state" based on the control signal received from the controller 100.

For example, by bringing all of the first circuit 8A, the second circuit 8B, and the third circuit 8C into the connected states, the three battery modules 90 are to be connected to the motor 31 in parallel.

On the other hand, it is supposed that one of the first circuit 8A, the second circuit 8B, and the third circuit 8C is brought into the connected state and the rest are brought into the disconnected states. In this case, only the one battery module 90 that is brought into the connected state is to be connected to the motor 31 and the remaining battery modules 90 that are brought into the disconnected states are separated from the motor 31 in an electric manner.

### <2. Details of Secondary Battery>

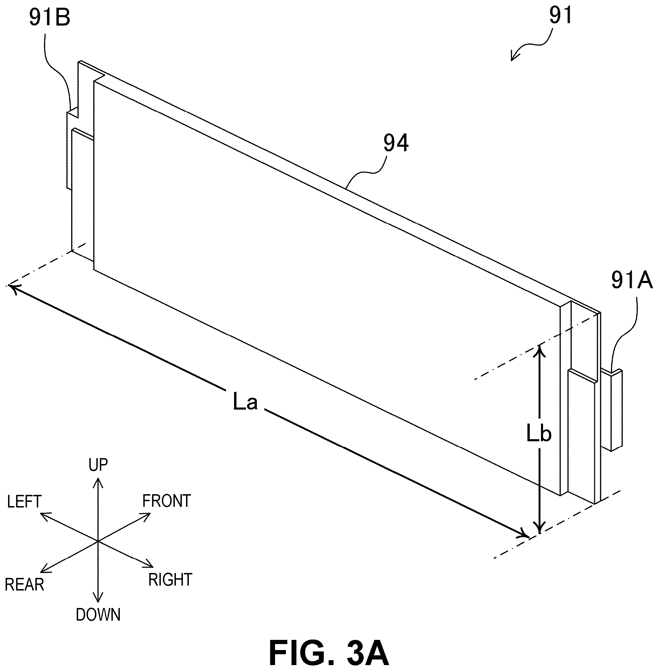

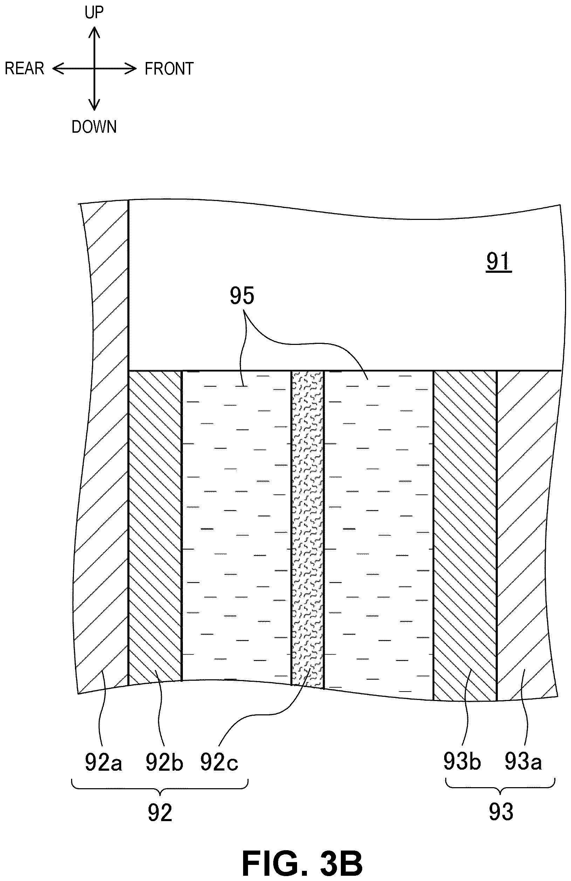

FIG. 3A is a perspective view exemplarily showing a configuration of the battery cell 91. FIG. 3B is a sectional view exemplarily showing the configuration of the battery cell 91. The section in FIG. 3B corresponds to a section taken along the front-rear direction and the up-down direction.

As shown in FIG. 2, each of the plurality of battery cells 91 constituting each battery module 90 has a plate shape. These battery cells 91 are housed in a box-like module container 90a in the state of lining up in the front-rear direction.

In detail, in each battery module 90, the plurality of battery cells 91 are disposed such that their longitudinal directions go along the vehicle width direction, their transverse directions go along the vehicle height direction, and their thickness directions go along the vehicle front-rear direction. Such disposition can make the dimension of each battery module 90 in the vehicle width direction (longitudinal direction) long while making the dimension thereof in the vehicle height direction as short as possible.

Moreover, with the module container 90a or a separate member independent of the module container 90a, on the plurality of battery cells 91 housed in each module container 90a, an external force that binds these in the front-rear direction acts.

Further, as shown in FIG. 3A, a dimension La of each of the plurality of battery cells 91 in the longitudinal direction is longer than a dimension Lb thereof in the transverse direction. In the case of the present embodiment, the dimension La in the longitudinal direction is three times or more of the dimension Lb in the transverse direction. Each battery cell 91 is a high aspect ratio battery cell. Each battery cell 91 can be referred to as what is called a blade battery or a blade cell.

Moreover, tabs 91A and 91B corresponding to a positive electrode and a negative electrode of each of the plurality of battery cells 91 are disposed at both ends of the battery cell 91 in the longitudinal direction.

More in detail, each battery cell 91 is constituted by negative electrode sheets 92 and positive electrode sheets 93 being alternately stacked. The negative electrode sheets 92 and the positive electrode sheets 93 alternately stacked are housed in a cell container 94 shown in FIG. 3A. Each battery cell 91 is a so-called lithium-ion battery using movement of lithium ions between electrodes.

As shown in FIG. 3B, the negative electrode sheet 92 has a current collector 92a, an active material 92b, and a separator 92c. The current collector 92a and the active material 92b constitute a so-called "negative electrode". The negative electrode sheet 92 extends in the vehicle width direction to be long.

The current collector 92a is a plate material with a small thickness extending in a direction perpendicular to the stacking direction. One of both ends of the current collector 92a protrudes outside the cell container 94, for example, through an opening positioned on one side of the cell container 94 in the longitudinal direction. This protrusion portion constitutes the tab 91A on the negative electrode side.

The active material 92b is applied onto a surface of the current collector 92a. The active material 92b on the negative electrode side includes silicon (Si). The negative electrode including the active material 92b and the current collector 92a faces the positive electrode sheet 93, for example, via the separator 92c.

In detail, the active material 92b constituting the negative electrode active material is a mixture of a Si-based active material and a carbon-based (C-based) active material. The Si-based active material is constituted, for example, of SiO. The C-based active material is constituted, for example, of graphite.

As shown in FIG. 3B, the positive electrode sheet 93 has a current collector 93a and an active material 93b. The current collector 93a and the active material 93b constitute a so-called "positive electrode". The positive electrode sheet 93 extends in the vehicle width direction to be long.

The current collector 93a is a plate material with a small thickness extending in a direction perpendicular to the stacking direction. One of both ends of the current collector 93a protrudes outside the cell container 94, for example, through an opening positioned on the other side of the cell container 94 in the longitudinal direction. This protrusion portion constitutes the tab 91B on the positive electrode side.

The active material 93b is applied onto a surface of the current collector 93a. The positive electrode including the active material 93b and the current collector 93a faces the active material 92b and the current collector 92a of the negative electrode sheet 92, for example, via the separator 92c.

Moreover, an electrolytic liquid 95 is encapsulated in the cell container 94. Lithium ions come and go between the electrodes via the electrolytic liquid 95. By causing current to flow into the battery cell 91 from the outside, lithium ions move to the negative electrode side. The movement of lithium ions generates a potential difference between the negative electrode and the positive electrode. The potential difference being generated by electric power supply from the outside is equivalent to the battery cell 91 being charged.

Moreover, by lithium ions moving from the negative electrode side to the positive electrode side, the potential difference mentioned above is relieved. At that time, current is to flow from the battery cell 91 to the outside. The potential difference being relieved by electric power supply to the outside is equivalent to the battery cell 91 discharging.

### <2. Configuration of Control Apparatus>

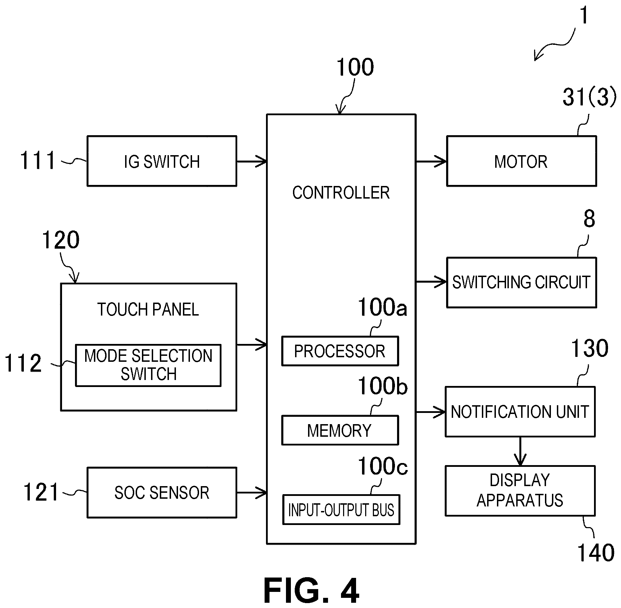

FIG. 4 is a block diagram exemplarily showing a configuration of the control apparatus 1 for the secondary battery 9. The control apparatus 1 includes switches such as an IG switch 111 and a mode selection switch 112, sensors such as SOC sensors 121, a notification unit 130, a controller 100, and the switching circuit 8 mentioned above.

The IG switch 111 is a switch for supplying electricity to the driving source 3 of the vehicle V. The IG switch 111 is electrically connected to the controller 100. When the IG switch 111 is manipulated, an electric signal for switching an operation mode of the vehicle V between "IG-ON" and "IG-OFF" is input into the controller 100. The IG switch 111 can also be called a power switch or an ignition switch.

The mode selection switch 112 is a switch for switching a discharge mode of the secondary battery 9. The mode selection switch 112 is electrically connected to the controller 100. When the mode selection switch 112 is manipulated, an electric signal corresponding to the content of the manipulation is input into the controller 100. Details of the discharge mode are mentioned later.

Notably, the mode selection switch 112 may be configured on a screen of a touch panel-type liquid crystal panel or organic EL panel, or may be configured as physical switches such as push buttons and toggle switches. In the case of the present embodiment, the mode selection switch 112 is displayed on a touch panel 150 arranged at a different position from that of a display apparatus 140.

The "IG-OFF" is a mode used in non-traveling of the vehicle V such as in parking and in leaving (particularly in power source disconnection of the driving source 3). In this mode, charge and discharge of the secondary battery 9 are restricted. In other words, in this mode, the secondary battery 9 and the driving source 3 are electrically separated (the electric connection therebetween is disconnected). As a result, both electric power supply from the secondary battery 9 to the driving source 3 and electric power supply from the driving source 3 to the secondary battery 9 are to be disconnected.

The "IG-ON" is a mode mainly used in traveling of the vehicle V (particularly while power being turned on for the driving source 3). In this mode, charge and discharge of the secondary battery 9 are allowed. In other words, in this mode, electricity is turned on for the secondary battery 9 and the driving source 3 (they are electrically connected). As a result, both electric power supply from the secondary battery 9 to the driving source 3 and electric power supply from the driving source 3 to the secondary battery 9 are to be allowed.

The SOC sensors 121 detect SOCs of the plurality of battery modules 90. Omitted from FIG. 4, the SOC sensors 121 are individually attached to the plurality of battery modules 90. In other words, the SOC sensors 121 individually detect the SOCs of the respective battery modules 90. The SOC sensors 121 are an exemplary illustration of a state sensor according to the present embodiment.

In detail, each SOC sensor 121 outputs a signal corresponding to the SOC for the corresponding battery module 90. More in detail, the SOC sensor 121 outputs the signal corresponding to the SOC, based on a measurement value of an open circuit voltage (Open Circuit Voltage: OCV). The SOC sensor 121 can be constituted of a voltage sensor that can measure a circuit voltage. The SOC sensor 121 is electrically connected to the controller 100. The SOC sensor 121 inputs the detection signal into the controller 100.

The notification unit 130 is electrically connected to the controller 100. The notification unit 130 is configured to notify an occupant of the vehicle V of information related to processing by the controller 100 mentioned later.

In detail, the notification unit 130 according to the present embodiment is electrically connected to the display apparatus 140 positioned in front of a driver's seat of the vehicle V. The display apparatus 140 has a screen displaying indicators such as a tachometer, a remaining battery amount, and the like. By controlling the contents of display on the screen of the display apparatus 140, the notification unit 130 notifies the occupant of the aforementioned information.

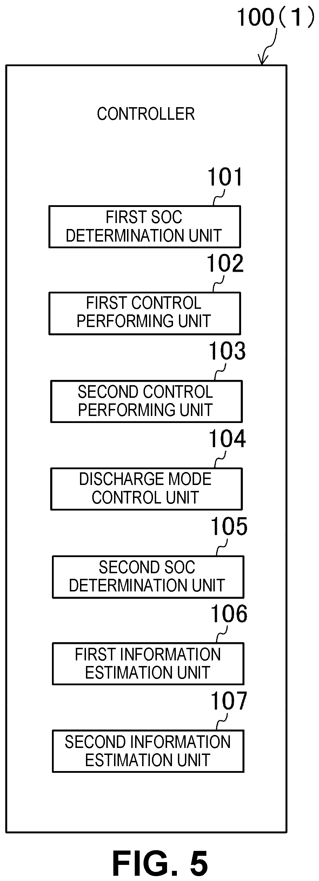

The controller 100 includes hardware such as a processor 100a, a memory 100b, and an input-output bus 100c and software such as a database and a control program. For functional elements related to the latter software, refer to FIG. 5.

Notably while one controller 100 is shown for the control apparatus 1 in FIG. 4, this controller 100 may be constituted, for example, of a module (PCM) for controlling the driving source 3 out of various control modules mounted on the vehicle V.

Based on signals input from the switches and the sensors mentioned above, the controller 100 performs processing related to charge and discharge of the secondary battery 9. In order to perform such processing, the controller 100 includes a plurality of functional blocks shown in FIG. 5.

### <3. Details of Controller>

The controller 100 according to the embodiment is configured to switch the electric connections between the plurality of battery modules 90 and the driving source 3 based on the detection signals of the SOC sensors 121.

Specifically, as shown in FIG. 5, the controller 100 includes a first SOC determination unit 101, a first control performing unit 102, a second control performing unit 103, a discharge mode control unit 104, a second SOC determination unit 105, a first information estimation unit 106, and a second information estimation unit 107.

### (3-1. First SOC Determination Unit)

Based on the detection signals of the SOC sensors 121, the first SOC determination unit 101 determines whether or not, for at least one of the plurality of battery modules 90, the SOC is not less than a predetermined first reference value. That this determination is NO is equivalent to the case where, for all of the plurality of battery modules 90, the SOCs are less than the predetermined first reference value.

Namely, the first SOC determination unit 101 can be regarded as determining whether or not the SOCs are less than the first reference value based on the detection signals of the SOC sensors 121 for all of the plurality of battery modules 90.

The first reference value is a reference value corresponding to an SOC less than full charge. In the present embodiment, the first reference value is set to any value within a range, in detail, not less than 10% and not more than 30%, more in detail, not less than 15% and not more than 25% relative to the fully charged state (100%). In the following description, there is a case where the "first reference value=20%" is regarded as being set as a tentative setting.

For each of the plurality of battery modules 90, the first SOC determination unit 101 determines whether or not the SOC of the battery module 90 is not less than the first reference value. Electric signals indicating the determination results by the first SOC determination unit 101 are input into the first control performing unit 102, the second control performing unit 103, and the discharge mode control unit 104.

### (3-2. First Control Performing Unit)

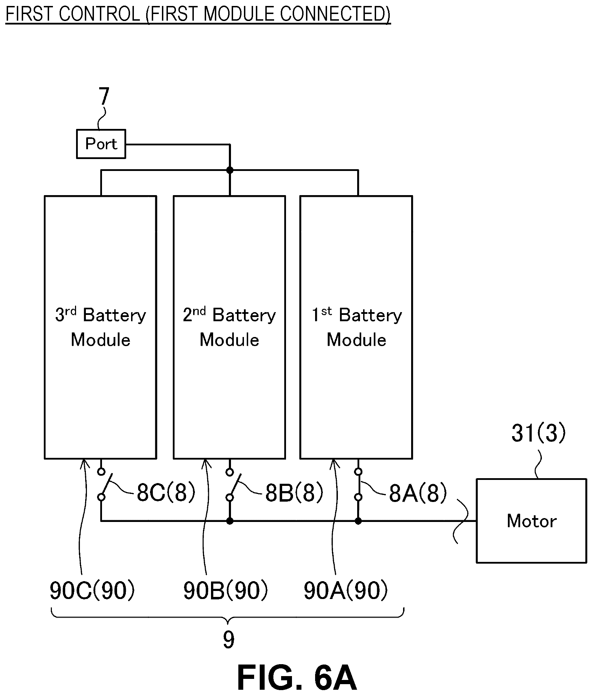

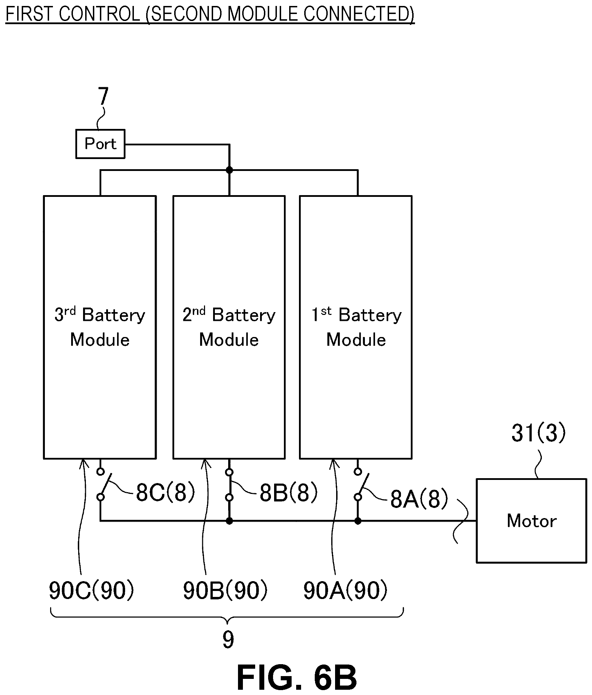

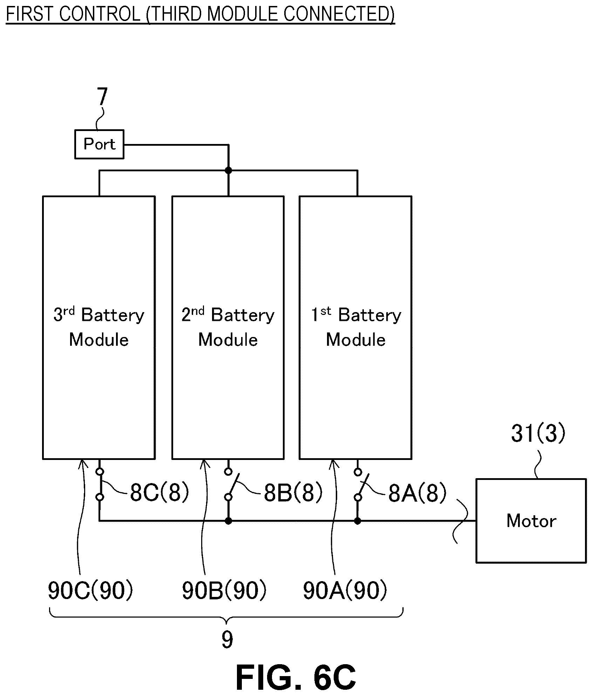

FIG. 6A, FIG. 6B, and FIG. 6C are diagrams for explaining a first control. When the SOC of at least one battery module 90 is not less than the first reference value, the first control performing unit 102 performs a predetermined first control. In detail, the first control performing unit 102 performs the first control for the battery module(s) 90 the SOC(s) of which are not less than the first reference value out of the plurality of battery modules 90. The first control performing unit 102 receives control signals from the first SOC determination unit 101 and the discharge mode control unit 102 to perform the first control.

Herein, the first control is processing of connecting the plurality of battery modules 90 one by one to the motor 31 and causing the plurality of battery modules 90 to discharge one by one until the SOC of each battery module 90 decreases to the first reference value. The first control performing unit 102 causes the battery modules 90 to be connected one by one to the motor 31 to supply electric power to the motor 31. The first control can be performed by the first control performing unit 102 being controlling the switching circuit 8 based on the detection signals of the SOC sensors 121.

For example, it is supposed that the SOCs of all of the battery modules 90 are not less than the first reference value. In this case, the controller 100 first brings only the first module 90A into the connected state, and brings the second module 90B and the third module 90C into the disconnected states (refer to FIG. 6A). Thereby, on the traveling of the vehicle V, only the first module 90A is to discharge.

After that, it is supposed that the SOC of the first module 90A decreases to the first reference value. In this case, the controller 100 brings, subsequently to the first module 90A, the second module 90B into the connected state, and brings the third module 90C and the first module 90A into the disconnected states (refer to FIG. 6B). Thereby, on the traveling of the vehicle V, only the second module 90B is to discharge.

After that, it is supposed that the SOC of the second module 90B decreases to the first reference value. In this case, the controller 100 brings, subsequently to the second module 90B, the third module 90C into the connected state, and brings the first module 90A and the second module 90B into the disconnected states (refer to FIG. 6C). Thereby, on the traveling of the vehicle V, only the third module 90C is to discharge.

### (3-3. Second Control Performing Unit)

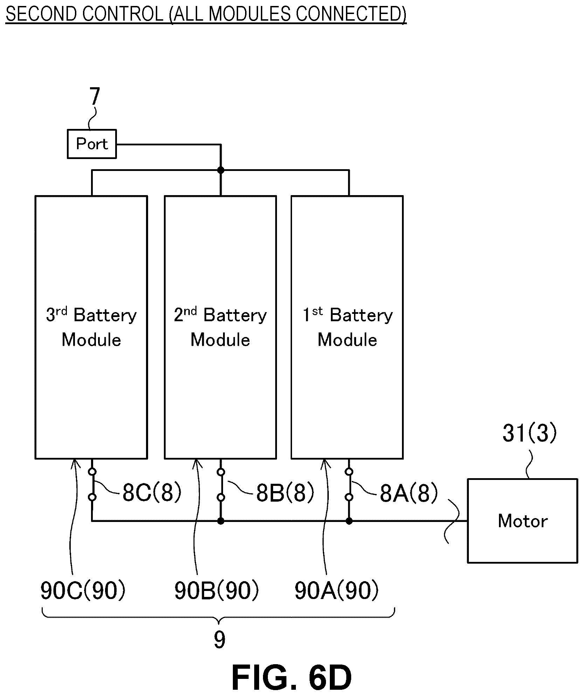

FIG. 6D is a diagram for explaining a second control. When the SOCs of all of the battery modules 90 are less than the first reference value, the second control performing unit 103 performs a predetermined second control. In detail, for all of the plurality of battery modules 90, the second control performing unit 103 performs the second control. The second control performing unit 103 receives control signals from the first SOC determination unit 101 and the discharge mode control unit 104 to perform the second control.

Herein, the second control is processing of connecting the plurality of battery modules 90 to the motor 31 in parallel and simultaneously causing the plurality of battery modules 90 to discharge (refer to FIG. 6D). The second control performing unit 103 simultaneously causes the plurality of battery modules 90 connected to the motor 31 to supply electric power to the motor 31. The second control can be performed by the second control performing unit 103 controlling the switching circuit 8 based on the detection signals of the SOC sensors 121.

The second control is set, when the SOCs of all of the battery modules 90 decrease to the first reference value by the first control, to be started in accordance with selection of the discharge mode.

### (3-4. Discharge Mode Control Unit)

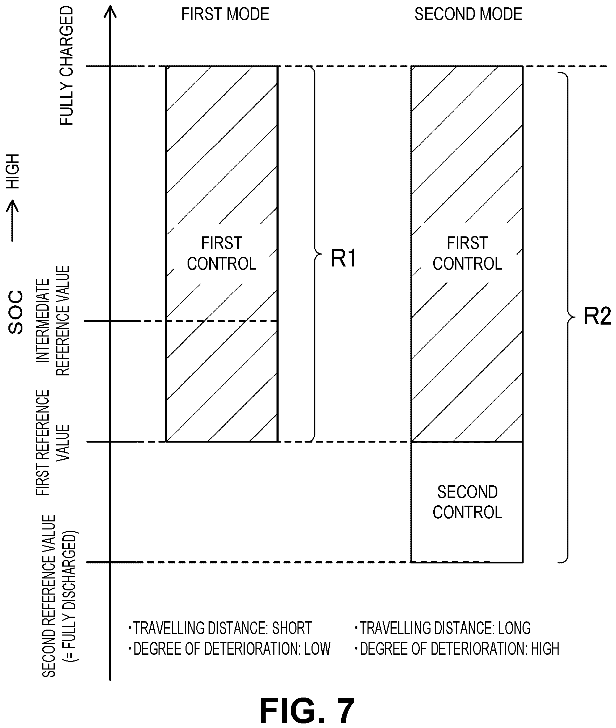

FIG. 7 is a diagram for explaining a plurality of discharge modes. The discharge mode control unit 104 selects one discharge mode from among a plurality of discharge modes, based on a setting input by an occupant. In the present embodiment, the setting input by an occupant is operation input with respect to the mode selection switch 112. The discharge mode control unit 102 selects the one discharge mode that is selected via the mode selection switch 112 by the occupant, from among the plurality of discharge modes.

For example, the selection of the discharge mode may be performed before the traveling of the vehicle V is started after the vehicle V is brought into IG-ON, or as mentioned later, may be performed during the traveling of the vehicle V based on the detection signals of the SOC sensors 121.

After that, the discharge mode control unit 104 selects and performs one of the first control and the second control based on the detection signals of the SOC sensors 121 so as to attain the selected one discharge mode. The first control and the second control are performed via the first control performing unit 102 and the second control performing unit 103 mentioned above.

Herein, the plurality of discharge modes includes the first mode and the second mode. The first mode and the second mode are different in SOC range used for the secondary battery 9. As shown in FIG. 7, an SOC range R1 used in the first mode and an SOC range R2 used in the second mode are different in lower limit value of the SOC range.

The first mode is a discharge mode that allows discharge from the fully charged state (SOC=100%) to the first reference value (SOC=20%). When the first mode is selected, under the condition that the SOC decreases to the first reference value, the electric power supply from the secondary battery 9 to the motor 31, and then, the traveling of the vehicle V are stopped.

Therefore, in the first mode, the SOC of the secondary battery 9 is not consumed until less than the first reference value. In the first mode, only the first control is to be performed. Namely, the first mode is a discharge mode of continuing the first control regardless of the detection signals of the SOC sensors 121 by allowing discharge within the SOC range R1 with the first reference value as a lower limit. The first mode is a more suitable discharge mode for deterioration restraining of the secondary battery 9 than the second mode, and this can also be called a "deterioration restraining mode".

The second mode is a discharge mode that allows discharge from the fully charged state (SOC=100%) to a second reference value. The second reference value is a reference value corresponding to an SOC less than the first reference value.

Specifically, the second reference value according to the present embodiment is set to the SOC (=0%) corresponding to the fully discharged state. When the second mode is selected, even when the SOC decreases to the first reference value, the traveling of the vehicle V can be continued until the SOC reaches the second reference value (SOC=0%).

Therefore, in the second mode, the SOC of the secondary battery 9 is consumed until less than the first reference value. In the second mode, the first control and the second control are configured to switch at the first reference value as the boundary. Namely, the second mode is a discharge mode of properly using the first control and the second control in accordance with the detection signals of the SOC sensors 121 by allowing discharge within the SOC range R2 with the second reference value as the lower limit. The second mode is a more suitable discharge mode for long distance traveling of the vehicle V than the first mode, and this can also be called a "long distance traveling mode".

### (3-5. Second SOC Determination Unit)

Based on the detection signals of the SOC sensors 121, the second SOC determination unit 105 determines whether or not the SOC of the entirety of the plurality of battery modules 90 decreases to a predetermined intermediate reference value.

The intermediate reference value is a predetermined value corresponding to an SOC that is set to be higher than the first reference value and lower than the fully charged state. In the present embodiment, the intermediate reference value is set to a value higher than the first reference value and not more than 40%, more in detail, higher than the first reference value and not more than 35%. In the following description, there is a case where the "intermediate reference value=30%" is regarded as being set as a tentative setting.

For example, the second SOC determination unit 105 calculates an average value of the SOCs individually detected for the plurality of battery modules 90, and compares the average value and the intermediate reference value. When the average value decreases to the intermediate reference value, the second SOC determination unit 105 determines that the SOC of the entirety of the plurality of battery modules 90 decreases to the predetermined intermediate reference value. An electric signal indicating the determination result by the second SOC determination unit 105 is input into the second information estimation unit 107.

### (3-6. First Information Estimation Unit)

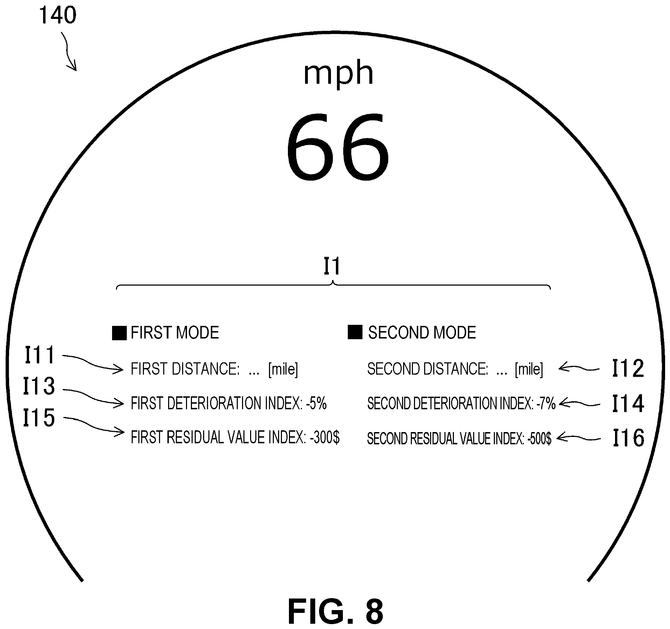

FIG. 8 is a diagram for explaining first information I1. Based on various kinds of information regarding the vehicle V, the first information estimation unit 106 estimates the first information I1. The first information estimation unit 106 notifies the occupant of the estimated first information I1 by controlling the display apparatus 140 via the notification unit 130.

The estimation and the notification of the first information I1 are performed, for example, at the timing after the driving source 3 is started (for example, after IG-ON of the vehicle V) and before the vehicle V starts to travel. The first information I1 includes indices as guides for selection at the time of selection of the first mode and the second mode by the occupant.

Herein, as shown in FIG. 8, the first information I1 is at least configured to include a first distance I11, a second distance I12, a first deterioration index I13, and a second deterioration index I14.

The first distance I11 indicates a travelable distance of the vehicle V in the first mode. The second distance I12 indicates a travelable distance of the vehicle V in the second mode. Since in the second mode, a wider SOC range is used than in the first mode (in other words, a discharge depth of the second mode is deeper than a discharge depth of the first mode), the second distance I12 is longer than the first distance I11.

The first distance I11 can be estimated based on a current SOC of the whole secondary battery 9, an electric power amount that can be used in the first mode, a torque load of the motor 31, and a rotational speed of the motor 31.

The second distance I12 can be estimated based on the current SOC of the whole secondary battery 9, an electric power amount that can be used in the second mode, the torque load of the motor 31, and the rotational speed of the motor 31.

The first deterioration index I13 indicates the degree of deterioration of the maximum capacity of the secondary battery 9 after traveling of the whole first distance I11. The first deterioration index I13 is an index indicating a decrease amount of the maximum capacity of the secondary battery 9 (maximum value of the battery capacity) at the timing when the whole first distance I11 has been traveled. In the case of the present embodiment, the larger the decrease amount of the maximum capacity is, the larger the first deterioration index I13 is.

For example, the maximum capacity (initial capacity) of the secondary battery 9 as new one is regarded as 100%, and the maximum capacity of the secondary battery 9 in the state where the rechargeable electric power amount is zero is regarded as 0%.

Further, it is supposed that the current maximum capacity (current capacity) of the secondary battery 9 is tentatively 90% and this maximum capacity is estimated to decrease to tentatively 87% after the traveling of the whole first distance I11. In this case, as the first deterioration index I13, a decrease amount from the current capacity "3% (=90%-87%)" can be used, for example.

The first deterioration index I13 can be estimated based on the current capacity, the current SOC of the whole secondary battery 9, a temperature of the secondary battery 9, the electric power amount that can be used in the first mode, and the like. Every time when the secondary battery 9 is charged, the current capacity is configured to be updated each time based on the number of cycles of charge and discharge, and the like and to be recorded each time.

The second deterioration index I14 indicates the degree of deterioration of the maximum capacity of the secondary battery 9 after traveling of the whole second distance I12. The second deterioration index I14 is an index indicating a decrease amount of the maximum capacity of the secondary battery 9 (maximum value of the battery capacity) at the timing when the whole second distance I12 has been traveled. In the case of the present embodiment, the larger the decrease amount of the maximum capacity is, the larger the second deterioration index I14 is.

For example, the maximum capacity (initial capacity) of the secondary battery 9 as new one is regarded as 100%, and the maximum capacity of the secondary battery 9 in the state where the rechargeable electric power amount is zero is regarded as 0%.

Further, it is supposed that the current maximum capacity (current capacity) of the secondary battery 9 is tentatively 90% and this maximum capacity is estimated to decrease to tentatively 85% after traveling of the whole second distance I12. In this case, as the second deterioration index I14, a decrease amount from the current capacity "5% (=90%-85%)" can be used, for example.

The second deterioration index I14 can be estimated based on the current capacity, the current SOC of the whole secondary battery 9, the temperature of the secondary battery 9, the electric power amount that can be used in the second mode, and the like. The current capacity is configured to be recorded every time when the secondary battery 9 is charged.

In the second mode, a wider SOC range is used than in the first mode (in other words, the discharge depth of the second mode is deeper than the discharge depth of the first mode). Moreover, the current capacity takes the same value both in selection of the first mode and in selection of the second mode. Accordingly, the second mode is larger in degree of deterioration of the secondary battery 9 than the first mode. The second deterioration index I14 is larger than the first deterioration index I13.

As shown in FIG. 8, by displaying the first distance I11 and the first deterioration index I13 which are related to the first mode and the second distance I12 and the second deterioration index I14 which are related to the second mode side by side, the occupant can be allowed to compare and investigate driving the vehicle V in the first mode suitable for deterioration restraining of the secondary battery 9 and driving the vehicle V in the second mode suitable for long distance traveling.

Furthermore, as shown in FIG. 8, the first information I1 is configured to include both of a first residual value index I15 and a second residual value index I16. When estimating the first information I1, the first information estimation unit 106 individually estimates the first residual value index I15 and the second residual value index I16. The first information estimation unit 106 notifies the occupant of the first information I1 including the first residual value index I15 and the second residual value index I16 by controlling the display apparatus 140 via the notification unit 130.

The first residual value index I15 indicates an economic value of the secondary battery 9 after traveling of the whole first distance I11. The "economic value" stated here may be a retail price of the secondary battery 9 or may be a replacement cost thereof. The first residual value index I15 may be the economic value of the secondary battery 9 or may be a change amount of this economic value, at the timing when the whole first distance I11 has been traveled.

For example, it is assumed that the economic value of the secondary battery 9 as new one is ten thousand dollars. Further, as in the aforementioned example, it is supposed that the current capacity is estimated to decrease from "90%" to "87%" at the time point when the whole first distance I11 has been traveled. The first deterioration index I13 in this case can be estimated to be "3%", for example.

In this case, the first residual value index I15 as the change amount of the economic value can be estimated to be "300 dollars" obtained by multiplying "ten thousand dollars" mentioned above by the first deterioration index I13. This estimation result can be interpreted as "When the whole first distance I11 has been traveled in the first mode, the economic value of the secondary battery 9 decreases by 300 dollars".

The second residual value index I16 indicates an economic value of the secondary battery 9 after traveling of the whole second distance I12. The "economic value" stated here may be a retail price of the secondary battery 9 or may be a replacement cost thereof. The second residual value index I16 may be the economic value of the secondary battery 9 or may be a change amount of this economic value, at the timing when the whole second distance I12 has been traveled.

For example, it is assumed that the economic value of the secondary battery 9 as new one is ten thousand dollars. Further, as in the aforementioned example, it is supposed that the current capacity is estimated to decrease from "90%" to "85%" at the time point when the whole second distance I12 has been traveled. The second deterioration index I14 in this case can be estimated to be "5%", for example.

In this case, the second residual value index I16 as the change amount of the economic value can be estimated to be "500 dollars" obtained by multiplying "ten thousand dollars" mentioned above by the second deterioration index I14. This estimation result can be interpreted as "When the whole second distance I12 has been traveled in the second mode, the economic value of the secondary battery 9 decreases by 500 dollars".

As shown in FIG. 8, by displaying the first distance I11 and the first residual value index I15 which are related to the first mode and the second distance I12 and the second residual value index I16 which are related to the second mode side by side, the occupant can be allowed to compare and investigate, from an economic viewpoint, driving the vehicle V in the first mode suitable for deterioration restraining of the secondary battery 9 and driving the vehicle V in the second mode suitable for long distance traveling.

In other words, while the first deterioration index I13 and the second deterioration index I14 are difficult for a general user to understand intuitively, by displaying them along with the first residual value index I15 and the second residual value index I16, the occupant can be prompted to weigh the long and short traveling distances and the high and low economic losses for making the determination.

### (3-7. Second Information Estimation Unit)

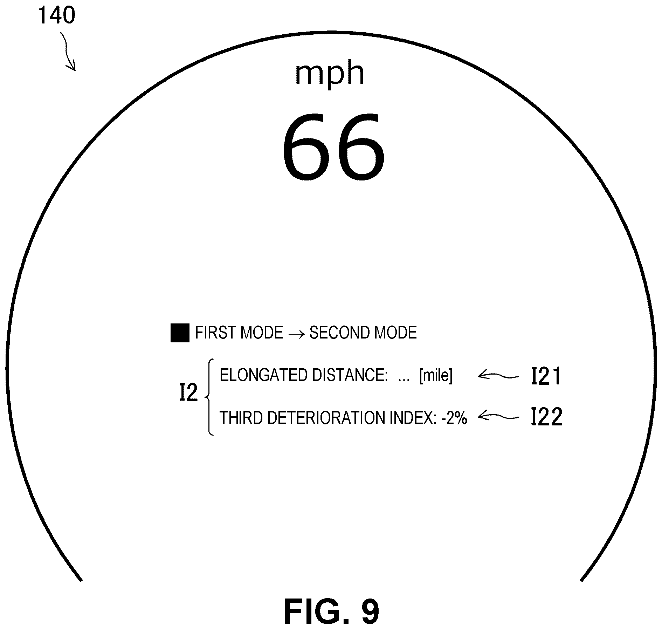

FIG. 9 is a diagram for explaining second information I2. Based on various kinds of information regarding the vehicle V, the second information estimation unit 107 estimates the second information I2. The second information estimation unit 107 notifies the occupant of the estimated second information I2 by controlling the display apparatus 140 via the notification unit 130.

The estimation and the notification of the second information I2 are performed, for example, after the driving source 3 being started (for example, after IG-ON of the vehicle V) and during the traveling of the vehicle V under selection of the first mode. For example, the timing of the notification of the second information I2 may be timing when the SOC of the entirety of the plurality of battery modules 90 decreases to the intermediate reference value with the second SOC determination unit 105. The second information I2 includes the indices as guides for selection of whether or not switch from the first mode to the second mode is performed during the traveling of the vehicle V.

Herein, as shown in FIG. 9, the second information I2 is at least configured to include an elongated distance I21 and a third deterioration index I22.

The elongated distance I21 indicates an elongated amount of the travelable distance in the case where switch from the first mode to the second mode is performed. For example, the elongated distance I21 may be a value obtained by subtracting the first distance I11 from the second distance 112, or may be estimated based on the torque load and the rotational speed of the motor 31, and the like at that time point.

The third deterioration index I22 indicates the degree of deterioration of the maximum capacity of the secondary battery 9 after traveling of the whole elongated distance I21. The third deterioration index I22 is an index indicating a decrease amount of the maximum capacity (maximum value of the battery capacity) of the secondary battery 9 at the timing when the whole elongated distance I21 has been traveled. For example, the third deterioration index I22 may be a value obtained by subtracting the first deterioration index I13 from the second deterioration index I14, or may be estimated based on the temperature of the secondary battery 9, and the like at that time point.

As shown in FIG. 9, by displaying the elongated distance I21 and the third deterioration index I22 in a row, the occupant can be allowed to compare and investigate continuing to drive the vehicle V while keeping the first mode and continuing to drive the vehicle V after switch from the first mode to the second mode.

### <4. Specific Example of Processing by Controller>

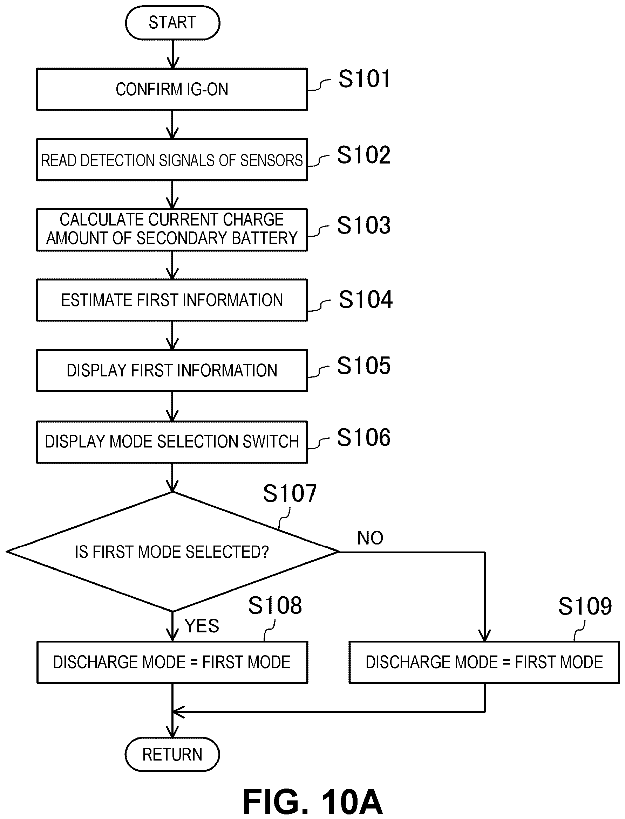

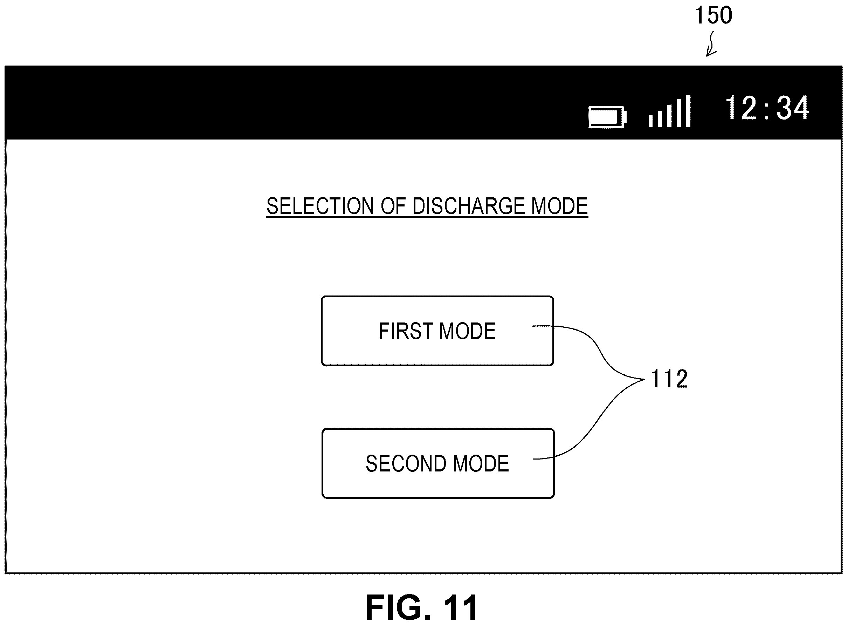

FIG. 10A is a flowchart showing a specific example of processing regarding selection of the first mode and the second mode. Moreover, FIG. 11 is a diagram exemplarily showing the mode selection switch 112 on the touch panel 150.

First, in step S101, the controller 100 confirms being in the "IG-ON" state. This confirmation can be performed based on whether or not the electric signal related to the IG switch 111 has been input into the controller 100. In the case of not being in the "IG-ON" state, the controller 100 ends the processing in FIG. 10A.

Subsequently in step S102, the controller 100 reads detection signals of sensors. The sensors as targets of the signal reading include the SOC sensors 121 and temperature sensors 122.

Subsequently in step S103, based on the detection signals of the SOC sensors 121, the controller 100 calculates a current charge amount of the secondary battery 9. This calculation can be performed based on the detection signals of the SOC sensors 121, the initial capacity mentioned above, and a current maximum capacity. The current maximum capacity is configured to be recorded every time when the secondary battery 9 is charged as mentioned later.

Subsequently in step S104, the first information estimation unit 106 estimates the first information I1. The estimated first information I1 includes information related to the first mode and information related to the second mode. The former information related to the first mode is configured to include the first distance I11, the first deterioration index I13, and the first residual value index I15. Meanwhile, the latter information related to the second mode is configured to include the second distance I12, the second deterioration index I14, and the second residual value index I16.

Subsequently in step S105, the first information estimation unit 106 displays the first information I1 estimated in step S104 on the screen of the display apparatus 140 by controlling the display apparatus 140 via the notification unit 130.

Subsequently in step S106, by controlling the display screen on the touch panel 150, the discharge mode control unit 104 displays the mode selection switch 112 on the screen (refer to FIG. 11). The discharge mode control unit 104 accepts selection of the discharge mode by the occupant based on the setting input with respect to the mode selection switch 112.

Subsequently in step S107, the controller 100 determines whether or not the first mode is selected in step S106. When this determination is YES, the controller 100 puts the control process forward to step S108. When it is put forward to step S108, the discharge mode control unit 104 sets the discharge mode to the first mode. Details of processing to be performed afterward is mentioned later.

On the other hand, when the determination in step S107 is NO, the controller 100 puts the control process forward to step S109. When it is put forward to step S109, the discharge mode control unit 104 sets the discharge mode to the second mode.

### (4-1. Processing Related to Second Mode)

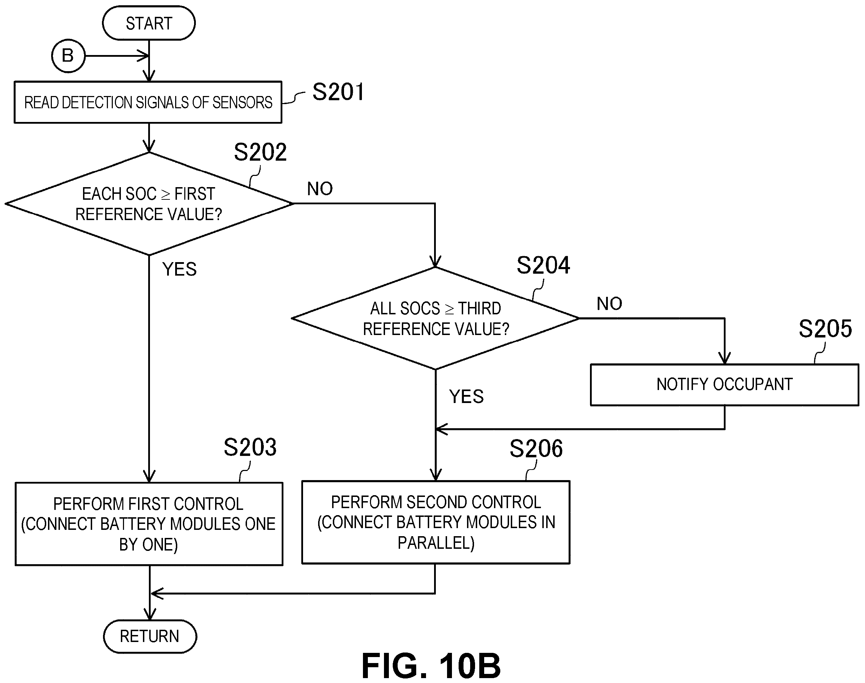

FIG. 10B is a flowchart exemplarily showing processing related to the second mode. The flow shown in FIG. 10B exemplarily shows a series of processes performed when the control process is put forward to step S109 in FIG. 10A. The flow in FIG. 10B is configured to be repeatedly performed during the driving in the second mode.

First, in step S201 in FIG. 10B, the first SOC determination unit 101 reads the detection signals of the SOC sensors 121 as in step S102 in FIG. 10A. The first SOC determination unit 101 performs determination based on the read detection signals.

Subsequently in step S202, based on the determination result by the first SOC determination unit 101, the discharge mode control unit 104 determines whether or not, for at least one of the plurality of battery modules 90, the SOC is not less than the predetermined first reference value.

When the determination in step S202 is YES, the discharge mode control unit 104 puts the control process forward to step S203, and when this determination is NO, puts the control process forward to step S204.

In step S203, the discharge mode control unit 104 performs the first control via the first control performing unit 102. The first control performing unit 102 selects, from among the plurality of battery modules 90, a battery module 90 having the SOCs not less than the first reference value, and connects the battery module 90 to the motor 31. When the process in step S203 is completed, the controller 100 ends the processing in FIG. 10B. When the IG-ON state is kept, the controller 100 repeats the series of processes sequentially from step S201 in FIG. 10B.

In step S204, based on the determination result by the first SOC determination unit 101, the discharge mode control unit 104 determines whether or not, for all of the plurality of battery modules 90, the SOCs are not less than a third reference value. The third reference value is a reference value that is higher than the value corresponding to the SOC in the fully discharged state and less than the first reference value. The third reference value may be set to a value corresponding to an SOC, in detail, not more than "SOC=10%", more in detail, not more than "SOC=5%".

When the determination in step S204 is YES, the discharge mode control unit 104 skips step S205 and puts the control process forward to step S206. When the determination in step S204 is NO, the discharge mode control unit 104 puts the control process forward to step S205.

In step S205, the controller 100 notifies the occupant to stop the vehicle and to perform charging through the display apparatus 140 and/or the like. When this notification is completed, the controller 100 puts the control process forward to step S206.

In step S206, the discharge mode control unit 104 performs the second control via the second control performing unit 103. The second control performing unit 103 connects the plurality of battery modules 90 to the motor 31 in parallel. When the process in step S206 is completed, the controller 100 ends the processing in FIG. 10B. After that, while the IG-ON state is being kept, the controller 100 repeats the series of processes sequentially from step S201 in FIG. 10B.

### (4-2. Processing Related to First Mode)

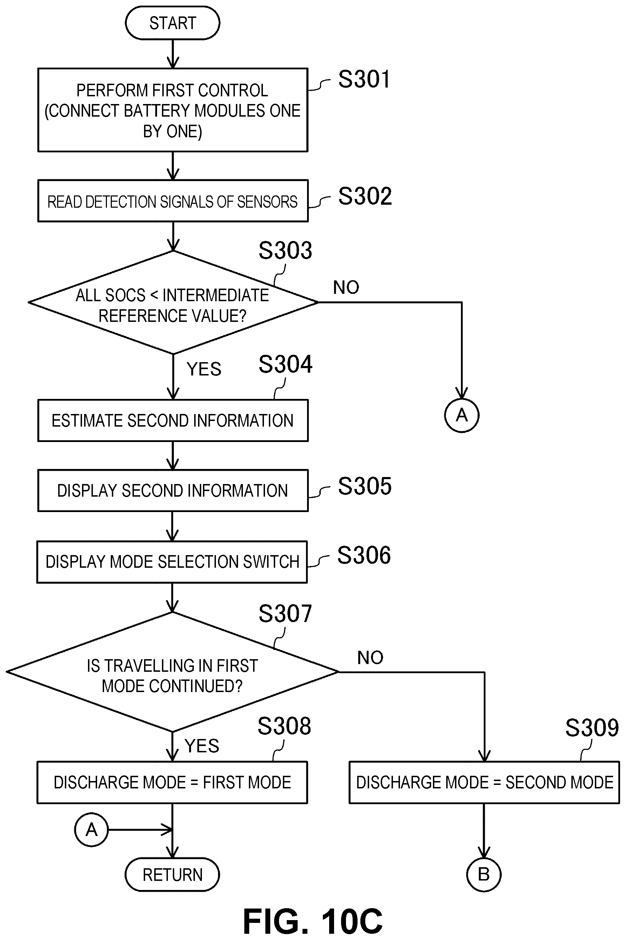

FIG. 10C is a flowchart exemplarily showing processing related to the first mode. The flow shown in FIG. 10C exemplarily shows a series of processes performed when the control process is put forward to step S108 in FIG. 10A. The flow shown in FIG. 10C is configured to be repeatedly performed during the driving in the first mode.

First, in step S301 in FIG. 10C, the discharge mode control unit 104 performs the first control via the first control performing unit 102. The first control performing unit 102 selects, from among the plurality of battery modules 90, a battery module 90 having the SOCs not less than the first reference value, and connects the battery module 90 to the motor 31. When the process in step S301 is completed, the controller 100 puts the control process forward to step S302.

Subsequently in step S302, the second SOC determination unit 105 reads the detection signals of the SOC sensors 121 as in step S102 in FIG. 10A. The second SOC determination unit 105 performs determination based on the read detection signals.

Subsequently in step S303, based on the determination result by the second SOC determination unit 105, the controller 100 determines whether or not the SOC of the entirety of the plurality of battery modules 90 decreases to the predetermined intermediate reference value.

When the determination in step S303 is YES, the controller 100 puts the control process forward to step S304, and when this determination is NO, ends the processing shown in FIG. 10C. After that, while the IG-ON state is being kept, the controller 100 repeatedly performs the series of processes sequentially from step S301 in FIG. 10C.

Subsequently in step S304, the second information estimation unit 107 estimates the second information I2. The estimated second information I2 is configured to include the elongated distance I21 and the third deterioration index I22.

Subsequently in step S305, the second information estimation unit 107 displays the second information I2 estimated in step S304 on the screen of the display apparatus 140 by controlling the display apparatus 140 via the notification unit 130.

Subsequently in step S306, by controlling the display screen on the touch panel 150, the discharge mode control unit 104 displays the mode selection switch 112 on the screen (refer to FIG. 11). Based on the setting input with respect to the mode selection switch 112, the discharge mode control unit 104 accepts selection of the discharge mode by the occupant, in other words, an instruction of switch from the first mode to the second mode.

Subsequently in step S307, the controller 100 determines whether or not continuing to travel in the first mode is selected in step S306. When this determination is YES, the controller 100 puts the control process forward to step S308. When it is put forward to step S308, the discharge mode control unit 104 keeps the discharge mode to be in the first mode, and ends the flow shown in FIG. 10C. After that, while the IG-ON state is being kept, the controller 100 is to perform the series of processes shown in FIG. 10C repeatedly sequentially from step S301 in the figure.

On the other hand, when the determination in step S307 is NO (when the instruction of switch from the first mode to the second mode is accepted), the controller 100 puts the control process forward to step S309. When it is put forward to step S309, the discharge mode control unit 104 changes the discharge mode to the second mode. After that, the controller 100 moves the control process from step S09 in FIG. 10C to step S201 in FIG. 10B. In this case, the series of processes subsequently to step S201 in the figure is to be started.

### <5. Significance of Individual Controls>

As described above, according to the embodiment, the controller 100 performs the first control when the SOC is not less than the first reference value (refer to FIG. 7 and FIG. 10B). Performing the first control can keep the number of battery cells 91 as targets of charge and discharge as few as possible, as compared with the case where the plurality of battery modules 90 are connected in parallel. This can restrain the frequency of expansion and contraction occurring in the battery cells 91 caused by the intercalation reaction and/or the like, and restrain the performance deterioration of the secondary battery 9 caused by peeling-off of the negative electrode active material 92b.

Moreover, in the case where the discharge depths of the battery cells 91 are deep, such as the case where the SOC is less than the first reference value, there arises concern of performance deterioration from another viewpoint different from that of the peeling-off, caused by the C-rate taking a high rate. Therefore, as clearly shown in FIG. 7, under conditions where such concern is supposed, the controller 100 does not perform the first control. This is significantly advantageous to restraining the performance deterioration of the secondary battery 9.

Moreover, as exemplarily shown in FIG. 7 and FIG. 10B, when the discharge depths of the battery cells 91 become deep, the plurality of battery modules 90 are connected to the motor 31 in parallel. This can restrain the C-rate per battery module 90, consequently, per battery cell 91, and is advantageous to restraining the performance deterioration of the secondary battery 9. By switching the electric connections in accordance with the SOCs, the performance deterioration of the secondary battery 9 can be restrained as much as possible.

Moreover, as described with reference to FIG. 7 and the like, since the first reference value is the lower limit, the first mode results in a shorter travelable distance than the second mode. Since the first reference value is the lower limit, the first mode is more excellent in restraining the performance deterioration of the secondary battery 9 than the second mode. In each of the first mode and the second mode, the travelable distance and the elongation of the service life of the secondary battery 9 are not compatible with each other, but there is employed a configuration that priority is given any of these. The occupant can drive the vehicle V in the first mode or can also drive the vehicle V in the second mode.

As above, by employing a configuration of causing the occupant to select one of the first mode and the second mode without fixation to one of these, flexible discharge control can be attained in accordance with the preference of the occupant, the situation where the occupant is placed, and the like. This can enable improvement of usability of the vehicle V and the cells 91.

Moreover, by notifying the occupant of the first information I1 as exemplarily shown in FIG. 8, an advantage of the first mode and an advantage of the second mode can be quantitatively grasped. Thereby, flexible discharge control can be attained in accordance with the preference of the occupant, the situation where the occupant is placed, and the like. This can improve usability of the vehicle V.

Moreover, while when only the first distance I11 and the second distance I12 are displayed, the second mode which leads to a longer travelable distance tends to be selected, by simultaneously making notification of the first deterioration index I13 and the second deterioration index I14 along with those, the occupant can be caused to grasp the degree of deterioration of the secondary battery 9 quantitatively. This can enhance the frequency of selection of the first mode, and is advantageous to restraining the performance deterioration of the secondary battery 9.

Moreover, as exemplarily shown in FIG. 8, by further making notification of the first residual value index I15 and the second residual value index I17, the occupant can be caused to grasp the degree of deterioration of the secondary battery 9 more appropriately. This can enhance the frequency of selection of the first mode, and is advantageous to restraining the performance deterioration of the secondary battery 9.

Moreover, as described using FIG. 10C, the controller 100 accepts change from the first mode to the second mode even during the vehicle V being traveling. Thereby, flexible discharge control can be attained in real time in accordance with the situation where the occupant is placed, and the like. This can improve usability of the vehicle V.

Moreover, while when the change to the second mode is simply accepted, the second mode which leads to a longer travelable distance tends to be selected, by notifying the occupant of the second information I2 including the third deterioration index I22, the occupant can be caused to grasp the degree of deterioration of the secondary battery 9 quantitatively. This can enhance the frequency of continuing the first mode, and is advantageous to restraining the performance deterioration of the secondary battery 9.

Moreover, as described using FIG. 10C, the occupant can be notified of the second information I2 in more appropriate timing during the vehicle V being traveling. This can improve usability of the vehicle V.

It has been recently revealed that the problem of peeling-off as mentioned above is significant when a Si-based active material is used for the active material 93b of the negative electrodes. The configuration as in the present embodiment is particularly effective in the case of using the active material 93b containing Si.

### [Reference Signs List]

- 3: driving source
- 31: motor
- 9: secondary battery
- 90: battery module
- 91: battery cell
- 92b: negative electrode active material
- 100: controller
- 112: mode selection switch
- 121: SOC sensor (state sensor)
- 130: notification unit
- 140: display apparatus
- 150: touch panel
- I1: first information
- I11: first distance
- I12: second distance
- I13: first deterioration index
- I14: second deterioration index
- I15: first residual value index
- I16: second residual value index
- I2: second information
- I21: elongated amount (elongated distance)
- I22: third deterioration index
- V: vehicle

## Claims

1. A control apparatus for a secondary battery (9), the secondary battery (9) including one or more battery cells (91) each having a negative electrode including a negative electrode active material and a plurality of battery modules (90) each including the one or more battery cells (91) and connected to a driving source (3) of a vehicle (v), the control apparatus supplying electric power to the driving source (3) from the plurality of battery modules (90), the control apparatus **characterized by** comprising:
a state sensor (121) for detecting a parameter indicating an SOC of each of the plurality of battery modules (90); and
a controller (100) configured to switch electric connections between the plurality of battery modules (90) and the driving source (3) based on a detection signal of the state sensor (121), wherein
the controller (100) is further configured to,
based on a detection signal of the state sensor (121), determine whether or not, for at least one of the plurality of battery modules (90), the detected SOC is not less than a predetermined first reference value, and
when the SOC is not less than the first reference value, to perform a first control of connecting the plurality of battery modules (90) one by one to the driving source (3) and causing the plurality of battery modules (90) to discharge one by one until the SOC of each battery module (90) decreases to the first reference value.

2. The control apparatus for a secondary battery (9) according to Claim 1, **characterized in that**
the controller is configured to,
based on a detection signal of the state sensor (121), determine whether or not, for all of the plurality of battery modules, the SOC is less than the first reference value, and
when the SOC is less than the first reference value, to perform a second control of connecting the plurality of battery modules (90) to the driving source (3) in parallel and simultaneously causing the plurality of battery modules (90) to discharge.

3. The control apparatus for a secondary battery (9) according to Claim 2, **characterized in that**
the controller (100) is configured to
based on a setting input by an occupant of the vehicle (v), to select one discharge mode out of a plurality of discharge modes that are set to correspond to the electric connections, and
to selects and perform one of the first control and the second control based on a detection signal of the state sensor (121) so as to attain the selected one discharge mode, and
the plurality of discharge modes includes
a first mode of continuing the first control regardless of the detection signal of the state sensor (121) by allowing discharge within a SOC range with the first reference value as a lower limit, and
a second mode of properly using the first control and the second control in accordance with the detection signal of the state sensor (121) by allowing discharge within a SOC range with a second reference value as a lower limit, the second reference value being set to be less than the first reference value.

4. The control apparatus for a secondary battery (9) according to Claim 3, **characterized in that**
after the driving source (3) is started, the controller (100) is configured to
notify the occupant of first information (I1) configured to include a first distance (I11) indicating a travelable distance of the vehicle (v) in the first mode, a second distance (I12) indicating a travelable distance of the vehicle (v) in the second mode, a first deterioration index (I13) indicating a degree of deterioration of a maximum capacity of the secondary battery (9) after traveling of the whole first distance (I11), and a second deterioration index (I14) indicating the degree of deterioration after traveling of the whole second distance, and
accepts selection of the first mode or the second mode based on the setting input of the occupant.

5. The control apparatus for a secondary battery (9) according to Claim 4, **characterized in that**
based on the first deterioration index (I13) and the second deterioration index (I14), the controller is configured to respectively estimate a first residual value index (I15) indicating an economic value of the secondary battery (9) after traveling of the whole first distance (I11) and a second residual value index (I16) indicating the economic value after traveling of the whole second distance (I12), and
the first information (I1) is configured to include both the first residual value index (I15) and the second residual value index (I16).

6. The control apparatus for a secondary battery (9) according to Claim 3, **characterized in that**
during the vehicle (v) being traveling under selection of the first mode, the controller is configured to
notify the occupant of second information (I2) configured to include an elongated amount (I21) of the travelable distance in a case of switch from the first mode to the second mode and a third deterioration index (I22) indicating a degree of deterioration of a maximum capacity of the secondary battery (9) after traveling of the whole elongated amount (I21), and
to accept change from the first mode to the second mode based on a setting input of the occupant.

7. The control apparatus for a secondary battery (9) according to Claim 6, **characterized in that**
when a predetermined value that is set to be higher than the first reference value and lower than a fully charged state is set to an intermediate reference value,
the controller (100) is configured to
based on the detection signal of the state sensor (121), determine whether or not the SOC of the entirety of the plurality of battery modules (90) decreases to the intermediate reference value, and
when the SOC decreases to the intermediate reference value, to perform notification of the second information (I2).

8. The control apparatus for a secondary battery (9) according to any of claims 4 to 7, **characterized in that** the controller (100) is configured to estimate the first distance (I11) based on a current SOC of the whole secondary battery (9), an electric power amount that can be used in the first mode, a torque load of the driving source (3), and a rotational speed of the motor (31) and/or the controller (100) is configured to estimate the second distance (I12) based on a current SOC of the whole secondary battery (9), an electric power amount that can be used in the second mode, a torque load of the driving source (3), and a rotational speed of the driving source (3) .

9. The control apparatus for a secondary battery (9) according to any of claims 4 to 8, **characterized in that** the controller (100) is configured to estimate the second deterioration index (I13) based on a current capacity of the secondary battery (9), a current SOC of the whole secondary battery (9), a temperature of the secondary battery (9) and an electric power amount that can be used in the first mode, and/or the controller (100) is configured to estimate the second deterioration index (I14) based on a current capacity of the secondary battery (9), a current SOC of the whole secondary battery (9), a temperature of the secondary battery (9) and an electric power amount that can be used in the second mode; said current capacity is preferably recorded every time when the secondary battery (9) is charged.

10. The control apparatus for a secondary battery (9) according to any one of Claims 1 to 9, **characterized in that** the negative electrode active material includes Si.

11. The control apparatus for a secondary battery (9) according to any of the preceding Claims, **characterized in that** the first reference value is set to be in a range between 10% to 30% relative to the fully charged state of a battery cell (91), preferably in a range between 15% and 25% and more preferably to be 20%.

12. A vehicle including a driving source (3) for driving the vehicle and a secondary battery (9) including a plurality of battery modules (90) for providing electric power to the driving source (3), the vehicle further comprising a control apparatus according to any of the preceding claims.

13. A method for supplying electric power from a secondary battery to a driving source of a vehicle (v), the vehicle comprising a secondary battery (9) including one or more battery cells (91) each having a negative electrode including a negative electrode active material and a plurality of battery modules (90) each including the one or more battery cells (91) and connected to a driving source (3) of the vehicle (v), and a control apparatus supplying electric power to the driving source (3) from the plurality of battery modules (90), the method includes the steps of:
detecting by a state sensor a parameter indicating an SOC of each of the plurality of battery modules (90); and
switching electric connections between the plurality of battery modules (90) and the driving source (3) based on a detection signal of the state sensor (121), wherein
based on a detection signal of the state sensor (121), determine whether or not, for at least one of the plurality of battery modules (90), the detected SOC is not less than a predetermined first reference value, and
when the SOC is not less than the first reference value, perform a first control of connecting the plurality of battery modules (90) one by one to the driving source (3) and causing the plurality of battery modules (90) to discharge one by one until the SOC of each battery module (90) decreases to the first reference value.

14. The method of claim 13, **characterized in that** the method is performed by a control apparatus according to any of Claims 1 to 11.
